# EUROPEAN PATENT APPLICATION

(11) **EP 4 501 854 A1**
(43) Date of publication of application: **05.02.2025**
(21) Application number: 23780366.3
(22) Date of filing: 27.03.2023
(51) Int. Cl.: C01G 9/02

(54) **COLUMNAR ZINC OXIDE MANUFACTURING METHOD AND COLUMNAR ZINC OXIDE**

(30) Priority: 31.03.2022 JP 2022058778
(71) Applicant: Fujimi Incorporated, Kiyosu-shi, Aichi 452-8502 (JP)
(72) Inventor: AKIYAMA, Tomomi, Kiyosu-shi, Aichi 452-8502 (JP); HAYAKAWA, Takashi, Kiyosu-shi, Aichi 452-8502 (JP); ARATANI, Shin, Kiyosu-shi, Aichi 452-8502 (JP); KAGAMI, Rina, Kiyosu-shi, Aichi 452-8502 (JP); MIWA, Naoya, Kiyosu-shi, Aichi 452-8502 (JP); ASHITAKA, Keiji, Kiyosu-shi, Aichi 452-8502 (JP)
(74) Representative: Maiwald GmbH
(86) International application number: PCT/JP2023/012229
(87) International publication number: WO 2023/190356

(57) **Abstract**

[Problem] To provide a production method of a columnar zinc oxide capable of obtaining a columnar zinc oxide at a high content proportion.

[Means for solution] A production method of a columnar zinc oxide, including a step of preparing a plate-shaped zinc compound in which an electrical conductivity of a supernatant liquid is 0.5 mS/cm or less, and a step of heating a dispersion liquid containing the plate-shaped zinc compound and a dispersing medium to 50°C or higher, in which the heating is performed so that a weight change rate of the dispersion liquid before and after heating is 2% or less.

## Description

### TECHNICAL FIELD

The present invention relates to a production method of a columnar zinc oxide and a columnar zinc oxide.

### BACKGROUND ART

Zinc oxide (ZnO) which is an oxide-based compound material has been variously developed as a material having various opto-electronic-magnetic functions. As applications of zinc oxide, for example, applications to a wide range of transparent conductive films, sensors, semiconductors, opto-electronic devices, optical circuits, nano devices, surface-treated thin films, and the like are expected. In such applications, as zinc oxide, nano-sized or micro-sized zinc oxide particles in various forms such as a nanowire, a nanorod, a nanobelt, and a nanoring have been reported.

In order to obtain zinc oxide in such various forms, various methods have been proposed so far. For example, Patent Literature 1 discloses a method in which a plate-shaped zinc compound is deposited by introducing NH₃ gas or a NH₃ aqueous solution into an aqueous solution containing zinc ions, and then a heat treatment is performed in a state where the deposited plate-shaped zinc compound is dispersed in water not containing zinc ions, anions which are counter ions of zinc ions, and ammonium ions. Since the method disclosed in Patent Literature 1 enables synthesis at a temperature equal to or lower than the boiling point of water at normal temperature, a columnar zinc oxide can be industrially advantageously produced.

### Citation List

### Patent Literature

Patent Literature 1: WO 2010/050430 A

### SUMMARY OF INVENTION

### Technical Problem

However, the technique of Patent Literature 1 still has a problem in that a columnar zinc oxide is obtained at a high content proportion.

Therefore, the present invention provides a production method of a columnar zinc oxide capable of obtaining a columnar zinc oxide at a high content proportion.

### Solution to Problem

The present inventors conducted intensive studies in view of the above problem. As a result, the present inventors found that the above problem is solved by a production method of a columnar zinc oxide, including a step of preparing a plate-shaped zinc compound in which an electrical conductivity of a supernatant liquid is 0.5 mS/cm or less, and a step of heating a dispersion liquid containing the plate-shaped zinc compound and a dispersing medium to 50°C or higher, in which the heating is performed so that a weight change rate of the dispersion liquid before and after heating is 2% or less, and completed the present invention.

### Advantageous Effects of Invention

According to the present invention, a production method of a columnar zinc oxide capable of obtaining a columnar zinc oxide at a high content proportion is provided.

### BRIEF DESCRIPTION OF DRAWINGS

Fig. 1 is an image of a columnar zinc oxide of an example captured with a scanning electron microscope.
Fig. 2 is an image of a zinc oxide of a comparative example captured with a scanning electron microscope.
Fig. 3 is an image of a columnar Al-doped zinc oxide of a reference example captured with a scanning electron microscope.

### DESCRIPTION OF EMBODIMENTS

The present invention is a production method of a columnar zinc oxide, including a step of preparing a plate-shaped zinc compound in which an electrical conductivity of a supernatant liquid is 0.5 mS/cm or less, and a step of heating a dispersion liquid containing the plate-shaped zinc compound and a dispersing medium to 50°C or higher, in which the heating is performed so that a weight change rate of the dispersion liquid before and after heating is 2% or less. According to such a production method of the present invention, a columnar zinc oxide can be produced at a high content proportion. Here, the fact that the content proportion of columnar zinc oxide is high means that the proportion of columnar zinc oxide to the generated zinc oxide is 90 number% or more. The content proportion of columnar zinc oxide can be calculated by a method of calculation as the "proportion of columnar particles" in Examples described later. Specifically, the content proportion of columnar zinc oxide can be calculated by observing zinc oxide (solid) using a scanning electron microscope (SEM) (SU8000, manufactured by Hitachi High-Technologies Corporation), and calculating the number of columnar particles with respect to the number of all particles observed in a field of view at a magnification of 5,000x.

According to the present invention, it is possible to obtain zinc oxide in which the content proportion of columnar zinc oxide is 90 number% or more. In one embodiment, the content proportion of columnar zinc oxide to zinc oxide obtained by the production method of the present invention is 92 number% or more.

The present inventors presume the mechanism for obtaining columnar zinc oxide at a high content proportion by the above production method as follows.

That is, the content of impurity ions in a plate-shaped zinc compound can be reduced by the step of preparing a plate-shaped zinc compound in which the electrical conductivity of a supernatant liquid is 0.5 mS/cm or less. Thus, it is considered that when zinc oxide is produced using a plate-shaped zinc compound as a starting material, impurity ions hardly inhibit crystal growth of zinc oxide, so that crystals in a columnar shape are easily formed. Further, it is considered that in the step of heating a dispersion liquid containing a zinc compound, by setting the weight change rate of the dispersion liquid before and after heating to 2% or less, the environment of crystallization of zinc oxide is easily made uniform for each crystal, and formation of crystals having other shapes other than columnar particles is prevented. As a result, the formation of columnar particles is promoted, and columnar zinc oxide can be obtained at a high content proportion.

Note that the above mechanism is based on presumption, and the present invention is not limited to the above mechanism at all.

Hereinafter, embodiments of the present invention will be described in detail. The embodiments illustrated herein are illustrated to embody the technical idea of the present invention, and do not limit the present invention. Therefore, other feasible embodiments, usage methods, operation techniques, and the like that can be conceived by those skilled in the art and the like are all included in the scope and gist of the present invention and included in the invention described in the claims and the scope of equivalents thereof without departing from the gist of the present invention. The embodiments described in the present description can be other embodiments by arbitrary combination. In the present description, unless otherwise specified, operations and measurements of physical properties and the like are performed under conditions of room temperature (20°C or higher and 25°C or lower)/relative humidity of 40% RH or more and 50% RH or less. In addition, in the present description, "weight" is synonymous with "mass", and "weight change rate" can also be referred to as "mass change rate".

### <Production method of columnar zinc oxide>

A production method of a columnar zinc oxide of the present invention includes a step of preparing a plate-shaped zinc compound in which an electrical conductivity of a supernatant liquid is 0.5 mS/cm or less (hereinafter, "step of preparing a plate-shaped zinc compound"), and a step of heating a dispersion liquid containing the plate-shaped zinc compound and a dispersing medium to 50°C or higher (hereinafter "step of heating a dispersion liquid containing the plate-shaped zinc compound"), in which the heating is performed so that a weight change rate of the dispersion liquid before and after heating is 2% or less. Hereinafter, each step will be described.

### [Step of preparing plate-shaped zinc compound]

The step of preparing a plate-shaped zinc compound is a step of preparing a plate-shaped zinc compound in which the electrical conductivity of a supernatant liquid is 0.5 mS/cm or less.

The plate-shaped zinc compound may be a compound having a plate shape and containing zinc. Here, the "plate shape", which is the shape of the plate-shaped zinc compound, means a shape in which the shape of a particle is smaller in thickness than in the length or width direction, and is sometimes referred to as a thin piece shape, a scale shape, or a flake shape.

In the plate-shaped zinc compound used in the production method of the present invention, the electrical conductivity of a supernatant liquid is 0.5 mS/cm or less. As water constituting the supernatant liquid (water used for preparing the supernatant liquid), water containing as few impurities as possible is preferred. For example, water in which the total content of transition metal ions is 100 ppb or less is preferred. The purity of water can be increased by, for example, an operation such as removal of impurity ions using an ion exchange resin, removal of foreign substances with a filter, and distillation. Specifically, for example, deionized water (ion exchanged water), pure water, ultrapure water, distilled water, or the like is preferably used. Hereinafter, water constituting the supernatant liquid, that is, water constituting the supernatant liquid and the washing liquid in the case of measuring the electrical conductivity may be referred to as "water" or "pure water".

Here, the method for obtaining the supernatant liquid in the step of preparing a plate-shaped zinc compound is not particularly limited, and it may be, for example, a supernatant liquid of a washing liquid obtained by washing using 300 mL of pure water with respect to 80 g of the plate-shaped zinc compound. The method for washing the plate-shaped zinc compound and the method for obtaining the supernatant liquid of the washing liquid are not particularly limited. In addition, it may be a supernatant liquid of a filtrate obtained by placing 80 g of the plate-shaped zinc compound and 300 mL of pure water in a container to obtain a plate-shaped zinc compound-containing liquid, stirring the plate-shaped zinc compound-containing liquid, and then filtering the plate-shaped zinc compound-containing liquid. Alternatively, it may be a supernatant liquid of a liquid in which precipitation occurs obtained by leaving the plate-shaped zinc compound-containing liquid after stirring to stand to precipitate the plate-shaped zinc compound. It may be a supernatant liquid of a liquid in which precipitation occurs obtained by centrifuging the plate-shaped zinc compound-containing liquid after stirring to precipitate the plate-shaped zinc compound. In addition, it may be a supernatant liquid of a filtrate generated by filtration obtained by washing the plate-shaped zinc compound through filtration using 300 mL of pure water with respect to 80 g of the plate-shaped zinc compound on a filter paper after being subjected to suction filtration. The moisture content of a solid used for measuring the electrical conductivity of the washing water may be 60 mass% or more and 90 mass% or less.

As described above, according to one embodiment, the step of preparing a plate-shaped zinc compound in which the electrical conductivity of the supernatant liquid is 0.5 mS/cm or less includes at least one of (a1) a step of washing the plate-shaped zinc compound with water to obtain a supernatant liquid as a washing liquid of the plate-shaped zinc compound, (a2) a step of testing whether or not the electrical conductivity of the supernatant liquid is 0.5 mS/cm or less, and (a3) a step of washing the plate-shaped zinc compound with water when the electrical conductivity of the supernatant liquid is not 0.5 mS/cm or less. Further, according to one embodiment, the step of preparing a plate-shaped zinc compound in which the electrical conductivity of the supernatant liquid is 0.5 mS/cm or less includes at least one of (b1) a step of preparing a plate-shaped zinc compound-containing liquid containing water and a plate-shaped zinc compound, and obtaining a supernatant liquid from the plate-shaped zinc compound-containing liquid, (b2) a step of testing whether or not the electrical conductivity of the supernatant liquid is 0.5 mS/cm or less, and (b3) a step of washing the plate-shaped zinc compound with water when the electrical conductivity of the supernatant liquid is not 0.5 mS/cm or less.

When zinc oxide is prepared using a plate-shaped zinc compound in which the electrical conductivity of the supernatant liquid exceeds 0.5 mS/cm, columnar particles are hardly obtained, and columnar zinc oxide cannot be obtained at a high content proportion. The electrical conductivity of the supernatant liquid is preferably 0.4 mS/cm or less, more preferably 0.3 mS/cm or less, still more preferably 0.2 mS/cm or less, particularly preferably 0.16 mS/cm or less, and most preferably 0.1 mS/cm or less. The lower limit of the electrical conductivity of the supernatant liquid is not particularly limited, and may be 0 mS/cm, but is practically 0.01 mS/cm or more.

As the electrical conductivity of the supernatant liquid, a value measured by the method described in examples is adopted. The electrical conductivity is measured for a supernatant liquid at 15°C or higher and 30°C or lower.

The plate-shaped zinc compound may be, for example, a commercially available plate-shaped zinc compound, or a plate-shaped zinc compound may be prepared from a compound containing zinc.

When a commercially available plate-shaped zinc compound is used, by performing at least one of the above steps (a1) to (a3) and (b1) to (b3), a plate-shaped zinc compound in which the electrical conductivity of the supernatant liquid is 0.5 mS/cm or less can be prepared.

Examples of the method for preparing a plate-shaped zinc compound from a compound containing zinc include a method in which a basic compound is added to an aqueous solution containing a water-soluble zinc salt to prepare a plate-shaped zinc compound. When a basic compound is added to an aqueous solution containing a water-soluble zinc salt, a zinc ion and a hydroxide ion dissolved in the aqueous solution react with each other, and zinc hydroxide in a plate shape precipitates (deposits). This precipitate can be used as the plate-shaped zinc compound. Therefore, the step of preparing a plate-shaped zinc compound further includes adding a basic compound to an aqueous solution containing a water-soluble zinc salt to prepare the plate-shaped zinc compound.

Examples of the water-soluble zinc salt include inorganic salts such as halides (fluorides, chlorides, bromides, and iodides), nitrates, sulfates, and phosphates; organic salts such as carboxylates such as acetates, and sulfonates; and the like. Among these, nitrates, sulfates, and acetates are preferred, nitrates and acetates are more preferred, and nitrates are still more preferred. Examples of the zinc salt include zinc chloride, zinc nitrate anhydride, zinc nitrate trihydrate, zinc nitrate hexahydrate, zinc sulfate anhydride, zinc sulfate heptahydrate, zinc acetate anhydride, zinc acetate dihydrate, zinc phosphate anhydride, zinc phosphate tetrahydrate, and the like. Among these, the water-soluble zinc salt is preferably at least one of zinc nitrate and zinc acetate.

The basic compound may be any water-soluble basic compound, and examples thereof include ammonia, sodium hydroxide, potassium hydroxide, sodium carbonate, potassium carbonate, sodium hydrogen carbonate, potassium hydrogen carbonate, urea, 2-amino-2-ethyl-1,3-propanediol, 2-(2-aminoethoxy)ethanol, diethanolamine, and the like. Among these, a preferred basic compound is one or more selected from the group consisting of ammonia, sodium hydroxide, potassium hydroxide, 2-amino-2-ethyl-1,3-propanediol, 2-(2-aminoethoxy)ethanol, and diethanolamine.

Examples of the method for depositing zinc hydroxide in a plate shape (plate-shaped zinc compound) from a water-soluble zinc salt include a method in which a basic compound (for example, ammonia gas, an aqueous ammonia solution, or the like) is added to an aqueous solution obtained by dissolving a water-soluble zinc salt (for example, zinc nitrate hexahydrate) in water (hereinafter, "zinc ion-containing aqueous solution") until the pH reaches 7.0 to 7.5 (preferably pH 7.5). In the zinc ion-containing aqueous solution, when a basic compound is introduced, a zinc ion dissolved in the aqueous solution react with a hydroxide ion, so that zinc hydroxide in a plate shape is formed and precipitates.

As water for dissolving a water-soluble zinc salt, tap water, distilled water, pure water, or the like can be used. The temperature of water and the zinc ion-containing aqueous solution when a water-soluble zinc salt is dissolved in water may be any temperature at which the water-soluble zinc salt can be dissolved, and is, for example, preferably 5 to 95°C, more preferably 10 to 80°C, still more preferably 15 to 65°C, and particularly preferably 20 to 40°C. In addition, the temperature of the zinc ion-containing aqueous solution when a basic compound is added to the zinc ion-containing aqueous solution is, for example, preferably 5 to 45°C, more preferably 15 to 40°C, and particularly preferably 20 to 35°C.

The concentration of zinc ions in the zinc ion-containing aqueous solution is preferably 0.1 to 4 mol/L, more preferably 0.2 to 3 mol/L, still more preferably 0.3 to 2 mol/L, and particularly preferably 0.4 to 1 mol/L. When the concentration of zinc ions in the zinc ion-containing aqueous solution is within the above range, the desired effect of the present invention is further exhibited.

The plate-shaped zinc compound having precipitated in the zinc ion-containing aqueous solution can be separated as a solid by a normal separation operation such as suction filtration or centrifugation. In addition, after the separation operation, by washing the obtained solid with water, compounds (for example, counter ions of a zinc salt, ammonium ions, and the like) derived from raw materials contained in the zinc ion-containing aqueous solution can be further removed. For example, the zinc ion-containing aqueous solution in which a precipitate is generated is subjected to suction filtration, and then the precipitate (plate-shaped zinc compound) obtained on a filter paper is washed (suction filtration) with water, whereby impurities (compounds derived from raw materials; for example, zinc ions, counter ions of a zinc salt, ammonium ions, and the like) attached to the plate-shaped zinc compound can be further removed. Here, as the water used for washing, water containing as few impurities as possible is preferred. For example, water in which the total content of transition metal ions is 100 ppb or less is preferred. The purity of water can be increased by, for example, an operation such as removal of impurity ions using an ion exchange resin, removal of foreign substances with a filter, and distillation. Specifically, for example, deionized water (ion exchanged water), pure water, ultrapure water, distilled water, or the like is preferably used. The washing water obtained in the suction filtration step can be used as a "supernatant liquid" for measuring the electrical conductivity by setting the amount of water used for washing to a predetermined amount.

After the plate-shaped zinc compound is obtained as described above, by performing at least one of the above steps (a1) to (a3) and (b 1) to (b3), a plate-shaped zinc compound in which the electrical conductivity of the supernatant liquid is 0.5 mS/cm or less can be prepared.

The obtained plate-shaped zinc compound may have a plate shape (that is, a shape in which the shape of a particle is smaller in thickness than in the length or width direction). In the plate-shaped zinc compound, the shape in the length or width direction of the plate shape is not particularly limited. As for the size of the plate shape, the shape is simulated as a circle, and the length of a line passing through the center of the circle is referred to as a diameter. Specifically, the diameter of the circumscribed circle to the particle surface is defined as the size of the plate-shaped zinc compound. For example, the plate-shaped zinc compound obtained by the above-mentioned method preferably has a plate shape having a diameter of 0.05 µm or more and 2 µm or less and a thickness of 0.01 µm or more and 0.4 µm or less. Here, the diameter and thickness of the plate-shaped zinc compound are values measured with a scanning electron microscope.

### [Step of heating dispersion liquid containing plate-shaped zinc compound]

Subsequently, in the step of heating the dispersion liquid containing the plate-shaped zinc compound, the dispersion liquid containing the plate-shaped zinc compound and a dispersing medium is heated to 50°C or higher. In this step, heating is performed so that the weight change rate of the dispersion liquid before and after heating is 2% or less.

The dispersing medium has a function of dispersing the plate-shaped zinc compound. The dispersing medium preferably contains water, and more preferably contains only water. In addition, the dispersing medium may be a mixed solvent of water and an organic solvent for dispersing the plate-shaped zinc compound. In this case, examples of the organic solvent to be used include acetone, acetonitrile, ethanol, methanol, isopropanol, glycerin, ethylene glycol, propylene glycol, and the like, which are organic solvents miscible with water. Further, these organic solvents may be mixed with water after the plate-shaped zinc compound is dispersed therein without mixing with water. These organic solvents can be used alone or two or more of these organic solvents can be used in combination.

The water is preferably water containing as few impurities as possible from the viewpoint of preventing contamination or inhibition of crystallization of the plate-shaped zinc compound. For example, water in which the total content of transition metal ions is 100 ppb or less is preferred. Here, the purity of water can be increased, for example, by an operation such as removal of impurity ions using an ion exchange resin, removal of foreign substances with a filter, and distillation. Specifically, for example, deionized water (ion exchanged water), pure water, ultrapure water, distilled water, or the like is preferably used.

In the method for preparing the dispersion liquid containing the plate-shaped zinc compound and the dispersing medium, the dispersing medium may be added to the plate-shaped zinc compound, or the plate-shaped zinc compound may be added to the dispersing medium. The temperature of the dispersing medium when the dispersion liquid is prepared is not particularly limited, but the dispersing medium heated to a heating temperature at which the heating step is performed may be used. In this case, the heating step can be promptly started only by mixing the dispersing medium and the plate-shaped zinc compound to disperse the plate-shaped zinc compound in the dispersing medium.

The content of the plate-shaped zinc compound in the dispersion liquid containing the plate-shaped zinc compound is preferably 1 mass% or more, more preferably 2 mass% or more, still more preferably 2.5 mass% or more, particularly preferably 3 mass% or more, and most preferably 4 mass% or more. The upper limit of the content of the plate-shaped zinc compound in the dispersion liquid containing the plate-shaped zinc compound is preferably 30 mass% or less, more preferably 25 mass% or less, still more preferably 22 mass% or less, particularly preferably 20 mass% or less, and most preferably 18 mass% or less. That is, the content of the plate-shaped zinc compound in the dispersion liquid containing the plate-shaped zinc compound is preferably 1 mass% or more and 30 mass% or less, more preferably 2 mass% or more and 25 mass% or less, further preferably 2.5 mass% or more and 22 mass% or less, particularly preferably 3 mass% or more and 20 mass% or less, and most preferably 4 mass% or more and 18 mass% or less. When the content of the plate-shaped zinc compound in the dispersion liquid containing the plate-shaped zinc compound is within the above range, the desired effect of the present invention is further exhibited.

In the step of heating the dispersion liquid containing the plate-shaped zinc compound, a container for heating the dispersion liquid containing the plate-shaped zinc compound is not particularly limited as long as the weight change rate of the dispersion liquid before and after heating can be controlled to 2% or less. For example, a container (sealed container) in which the inside of the container can be made a closed space so that volatilization of the dispersing medium can be prevented in the heating step is preferred. Examples of such a container include a container with a lid, a container that can be plugged with a rubber plug or the like, and the like, but are not particularly limited as long as it can be made a sealed container. The material of the container is not particularly limited, and may be any of resins such as polypropylene, polyethylene terephthalate, and polytetrafluoroethylene, metals such as stainless steel, glass, and the like. For example, when the dispersion liquid containing the plate-shaped zinc compound is prepared, the dispersion liquid containing the plate-shaped zinc compound is transferred to a sealed container before the heating step after being prepared in a beaker or the like, and the heating step may be performed in the sealed container.

In the heating step, the inside of the sealed container in which the dispersion liquid containing the plate-shaped zinc compound is sealed (hereinafter, "dispersion liquid-sealed container") may be an air atmosphere or an inert gas such as nitrogen may be sealed therein. In the dispersion liquid-sealed container, the filling rate of the dispersion liquid in the container is preferably 4 vol% or more, more preferably 7 vol% or more, still more preferably 10 vol% or more, particularly preferably 15 vol% or more, and most preferably 35 vol% or more. When the filling rate of the dispersion liquid in the container is within the above range, the weight change of the dispersion liquid before and after heating is further reduced, so that the formation of columnar zinc oxide is further improved. The upper limit of the filling rate of the dispersion liquid in the container is not particularly limited, and may be 100 vol%, but is practically preferably 95 vol% or less. The upper limit of the filling rate of the dispersion liquid in the container is more preferably 80 vol% or less, still more preferably 70 vol% or less, particularly preferably 65 vol% or less, and most preferably 60 vol% or less. The filling rate of the dispersion liquid in the container is calculated as the volume of the filled dispersion liquid with respect to the inner volume of the container (volume of filled dispersion liquid/inner volume of container).

In the step of heating the dispersion liquid containing the plate-shaped zinc compound, the dispersion liquid is heated to 50°C or higher. When the heating temperature of the dispersion liquid is lower than 50°C, the proportion of the columnar particles is reduced in zinc oxide to be obtained. The heating temperature of the dispersion liquid is preferably 55°C or higher, more preferably 60°C or higher, still more preferably 70°C or higher, particularly preferably 75°C or higher, and most preferably 78°C or higher. When the heating temperature of the dispersion liquid is within the above range, columnar zinc oxide can be obtained at a high content proportion. Further, the upper limit of the heating temperature is not particularly limited, but is preferably 98°C or lower, more preferably 95°C or lower, still more preferably 93°C or lower, particularly preferably 90°C or lower, and most preferably 85°C or lower from the viewpoint of production cost and safety.

That is, the heating temperature is preferably 55°C or higher and 98°C or lower, more preferably 60°C or higher and 95°C or lower, still more preferably 70°C or higher and 93°C or lower, particularly preferably 75°C or higher and 90°C or lower, and most preferably 78°C or higher and 85°C or lower.

In the step of heating the dispersion liquid containing the plate-shaped zinc compound, heating is preferably performed by leaving the dispersion liquid to stand or stirring the dispersion liquid at a predetermined temperature under normal pressure. Here, the leaving the dispersion liquid to stand at a predetermined temperature means that, for example, the dispersion liquid-sealed container may be disposed in a thermostat bath maintained at a predetermined temperature. The thermostat bath may be one that can maintain a predetermined temperature such as a thermostat chamber, a hot water bath, or an oil bath. In the case of stirring at a predetermined temperature, a stirring bar is placed in advance in the dispersion liquid-sealed container, and stirring may be performed using a stirrer in a thermostat bath. Alternatively, stirring may be performed at a predetermined temperature using a reaction container having a stirring function such as a stirring blade in a sealed container having a temperature control function. The dispersion liquid may be heated from room temperature to the heating temperature, but as described above, the plate-shaped zinc compound may be dispersed in the dispersing medium heated to the heating temperature when the dispersion liquid is prepared. In the present description, it is determined that the heating step is started when the dispersion liquid starts to be heated to the predetermined heating temperature.

In the step of heating the dispersion liquid containing the plate-shaped zinc compound, the heating time is preferably 2 hours or more and 200 hours or less, more preferably 3 hours or more and 150 hours or less, still more preferably 5 hours or more and 120 hours or less, particularly preferably 8 hours or more and 100 hours or less, and most preferably 10 hours or more and 50 hours or less. When the heating time of the dispersion liquid is within the above range, columnar zinc oxide can be obtained at a high content proportion.

In the step of heating the dispersion liquid containing the plate-shaped zinc compound, heating is performed so that the weight change rate of the dispersion liquid before and after heating is 2% or less. Here, the "weight change rate of the dispersion liquid before and after heating" means a weight change rate of the dispersion liquid before and after heating with respect to the weight of the dispersion liquid before heating [(weight of dispersion liquid before heating - weight of dispersion liquid after heating)/weight of dispersion liquid before heating], and is calculated by the method described in examples in detail. When the "weight change rate of the dispersion liquid before and after heating" exceeds 2%, it is difficult to obtain zinc oxide in the form of columnar particles, and columnar zinc oxide cannot be obtained at a high content proportion. The weight change rate of the dispersion liquid before and after heating is preferably less than 2%, more preferably 1.9% or less, still more preferably 1.8% or less, particularly preferably 1.5% or less, and most preferably 1% or less. When the weight change rate of the dispersion liquid before and after heating is within the above range, columnar zinc oxide can be obtained at a high content proportion. In the present description, the "weight change rate of the dispersion liquid before and after heating" may be referred to as "weight loss after heating".

By heating the dispersion liquid containing the plate-shaped zinc compound, a precipitate (product) is obtained. After the heating step is performed for a predetermined time, a precipitate generated from the dispersion liquid is taken out from the dispersion liquid by a normal separation operation such as filtration or centrifugation. The obtained precipitate is preferably washed with water, and more preferably washed until the electrical conductivity of the supernatant liquid of the washing liquid becomes 0.5 mS/cm or less. The electrical conductivity of the supernatant liquid is more preferably 0.4 mS/cm or less, still more preferably 0.3 mS/cm, particularly preferably 0.25 mS/cm or less, and most preferably 0.2 mS/cm or less. By performing washing until the electrical conductivity of the supernatant liquid falls within the above range, impurity ions can be reduced, and a columnar zinc oxide with less impurities is obtained. Here, as the electrical conductivity of the supernatant liquid, a similar method can be applied except that 300 mL of pure water is used with respect to 20 g of zinc oxide in the method for washing the plate-shaped zinc compound and the method for obtaining the supernatant liquid of the washing liquid to be performed in the step of preparing the plate-shaped zinc compound.

The precipitate (product) separated as described above is preferably heated for drying. The heating temperature for drying is preferably 80°C or higher and 150°C or lower, more preferably 90°C or higher and 120°C or lower, still more preferably higher than 100°C and 115°C or lower, particularly preferably higher than 100°C and 110°C or lower, and most preferably 101°C or higher and lower than 110°C. Here, the precipitate also contains zinc hydroxide in addition to zinc oxide. By heating the precipitate at a temperature in the above temperature range, the zinc hydroxide is thermally decomposed into zinc oxide, and the zinc oxide content of the obtained particles can be increased. Therefore, in one embodiment, it is preferred to further include a drying step of drying the product (precipitate) obtained through the step of heating under a temperature condition exceeding 100°C.

According to the production method of the present invention, columnar zinc oxide is obtained. The columnar shape is a shape of a columnar body, and means a shape elongated in one direction. For example, in the present description, the columnar shape means a prismatic shape having a plurality of surfaces elongated in one direction and two polygonal bottom surfaces as side surfaces of the plurality of surfaces; a cylindrical shape having one surface elongated in one direction and two circular bottom surfaces as side surfaces of the surface; a shape having one or more surfaces elongated in one direction, and having surfaces in a concave shape, a convex shape, a pyramid shape, a conical shape, or the like other than flat surfaces as two bottom surfaces; or the like. In the columnar zinc oxide of the present invention, the shape of the bottom surface is not particularly limited, and may be a substantially triangular shape, a substantially quadrangular shape, a substantially hexagonal shape, a substantially elliptical shape, a substantially circular shape, or the like, and the size of the bottom surface is also not particularly limited. The shape of the columnar zinc oxide according to the present invention can be checked by, for example, a SEM image captured at a magnification of 3,000x to 10,000x using a scanning electron microscope (SEM) (SU8000, manufactured by Hitachi High-Technologies Corporation). In the present description, in a surface elongated in one direction of the columnar zinc oxide, a long side is referred to as a major axis, and a short side is referred to as a minor axis.

The minor axis (average minor axis) of the columnar zinc oxide according to the present invention is preferably 0.3 µm or more and 3 µm or less, more preferably 0.5 µm or more and 2.5 µm or less, still more preferably 0.75 µm or more and 2 µm or less, and particularly preferably 1.0 µm or more and 1.5 µm or less. The major axis (average major axis) of the columnar zinc oxide is preferably 1 µm or more and 20 µm or less, more preferably 1.5 µm or more and 15 µm or less, still more preferably 2 µm or more and 13 µm or less, and particularly preferably 2.5 µm or more and 12 µm or less. The aspect ratio (average aspect ratio) of the columnar zinc oxide is preferably 2 or more and 10 or less, more preferably 3 or more and 8 or less, and still more preferably 4 or more and 6 or less. If the average aspect ratio is 3 or more, it is easy to form a network structure by contact of columnar particles when conductive particles obtained by doping the columnar zinc oxide with a metal and a resin are kneaded, so that high electrical conductivity is obtained even with a small addition amount. Further, if the average aspect ratio is 8 or less, the viscosity when conductive particles obtained by doping the columnar zinc oxide with a metal and a resin are kneaded does not become too high, and the content of the columnar zinc oxide in a resin composition can be increased.

In the present description, the particle size (minor axis and major axis) of the columnar zinc oxide is calculated as follows using image analysis type particle size distribution measurement software (MacView, manufactured by Mountech Co., Ltd.) on the basis of several (specifically, 3 or more and 20 or less; for example, 4 to 15) SEM images with a magnification of 3,000x to 10,000x. On the basis of the SEM image, the minor axis and the major axis of a total of about 150 (specifically, 120 or more and 200 or less; for example, 130 to 180) particles are measured using the software, and D₅₀ of the volume distribution is calculated for each of the minor axis and the major axis, and the D₅₀ of the volume distribution of the minor axis is taken as the value of the average minor axis and the D₅₀ of the volume distribution of the major axis is taken as the value of the average major axis. The average aspect ratio is calculated by dividing the average major axis by the average minor axis (that is, "average major axis/average minor axis") for the obtained particle size (average minor axis and average major axis).

It is considered that the mechanism for obtaining columnar zinc oxide by the production method of the present invention is such that it is generated by dissolution and re-deposition of the plate-shaped zinc compound. It is considered that when the plate-shaped zinc compound (for example, zinc hydroxide) is heated in a state of being dispersed in the dispersing medium (for example, water), the plate-shaped zinc compound is dissolved, and changes into zinc oxide and deposits, the zinc oxide becomes columnar with crystal growth. After the zinc oxide is obtained by heating, the zinc oxide may be further heated for drying.

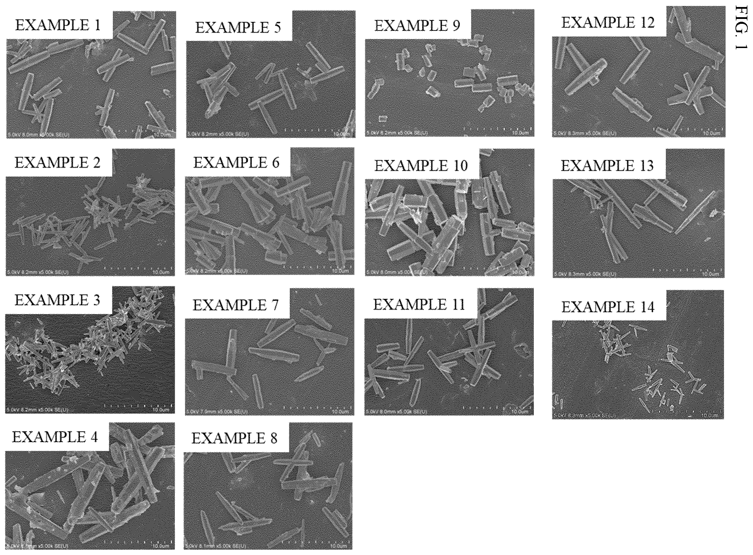

As described above, according to the production method of the present invention, columnar zinc oxide can be obtained with high efficiency. Further, according to the production method of the present invention, the columnar zinc oxide can be obtained as a single particle. Although the mechanism by which the columnar zinc oxide can be obtained as a single particle by the production method of the present invention is unknown, it is considered that the production method of the present invention is suitable for crystal growth of a single particle. It can be checked from Fig. 1 that the columnar zinc oxide obtained by the production method of the present invention is a single particle. That is, according to the production method of the present invention, a columnar zinc oxide existing with high efficiency and as a single particle can be produced with high efficiency.

According to one embodiment of the present invention, a columnar zinc oxide, in which an average minor axis exceeds 0.5 µm and an average aspect ratio is 2 or more and 10 or less, is provided. According to one embodiment of the present invention, a columnar zinc oxide, in which an average minor axis exceeds 0.75 µm and an average aspect ratio is 2 or more and 10 or less, is provided. According to one embodiment of the present invention, a columnar zinc oxide, in which an average minor axis exceeds 1.0 µm and an average aspect ratio is 2 or more and 10 or less, is provided. Here, the columnar zinc oxide, in which an average minor axis exceeds 0.75 µm (preferably exceeds 1.0 µm) and an average aspect ratio is 2 or more and 10 or less, can exhibit an effect of reducing the viscosity in a resin composition containing the columnar zinc oxide and a resin. That is, in the resin composition containing the columnar zinc oxide having the above configuration, the viscosity of the resin composition is remarkably lower than that of a resin composition containing the columnar zinc oxide having an average minor axis of 0.75 µm or less in the same amount. This can increase the content of the columnar zinc oxide in the resin composition. For example, when the columnar zinc oxide is doped with a metal to form conductive particles as described later, higher electrical conductivity can be exhibited as the content of the conductive particles increases. Therefore, the conductive particles obtained using the columnar zinc oxide according to the present invention can be blended in a large amount in a conductive resin composition, and a conductive resin composition having high electrical conductivity can be obtained.

### [Step of doping columnar zinc oxide with metal]

In one embodiment, the production method of the present invention further includes, after the drying step, a step of doping the columnar zinc oxide obtained through the drying step with a metal. Thus, a columnar metal-doped zinc oxide having electrical conductivity can be obtained.

Here, the metal used for doping the columnar zinc oxide may be one or more selected from metals, oxides of metals, or alloys. Specific examples thereof include metals such as gold, silver, copper, platinum, zinc, iron, tin, lead, aluminum, cobalt, indium, nickel, chromium, titanium, antimony, bismuth, gallium, germanium, cadmium, ruthenium, rhodium, palladium, and silicon, alloys thereof, and the like. Examples of the metal oxide include zinc oxide, titanium oxide, tin oxide, tin-antimony-based oxide (ATO), indium-tin-based oxide (ITO), gallium-zinc-based oxide (GZO), indium-zinc-based oxide (IZO), calcium-aluminum-based oxide (12CaO·7Al2O₃ (abbreviation: C12A7)), and combinations thereof. In consideration of safety of the columnar metal-doped zinc oxide to be obtained, at least one of aluminum and gallium is preferred.

The amount of the metal used for doping in the columnar metal-doped zinc oxide is not particularly limited, but the molar ratio (mol%) of the metal used for doping with respect to zinc oxide is preferably 0.005 mol% or more and 3 mol% or less, and more preferably 0.01 mol% or more and 1 mol% or less. When the molar ratio of the metal used for doping with respect to zinc oxide in the columnar metal-doped zinc oxide is within the above range, the effect of reducing the electrical resistance is sufficiently obtained.

The particle shape and particle size of the columnar metal-doped zinc oxide according to the present invention greatly depend on the particle shape and particle size of the columnar zinc oxide, and the columnar metal-doped zinc oxide has a particle form similar to the columnar zinc oxide.

The columnar metal-doped zinc oxide according to the present invention can be prepared, for example, by mixing the columnar zinc oxide and a salt compound of a metal used for doping in a dispersing medium. Examples of the dispersing medium include water, ethanol, methanol, butanol, acetonitrile, acetone, ethylene glycol, and the like. In the present invention, after the columnar zinc oxide is dispersed in the dispersing medium, a salt compound of a metal used for doping may be further added to the dispersing medium, or after a salt compound of a metal used for doping is dissolved in the dispersing medium, the columnar zinc oxide may be added to the dispersing medium.

It is preferred that the columnar zinc oxide and the metal are mixed in the dispersing medium, and then dried and fired. The drying temperature is preferably 80°C or higher, more preferably 95°C or higher, and still more preferably 100°C or higher. The drying time is not particularly limited as long as drying can be achieved, but for example, it is preferably 0.5 hours or more and 20 hours or less, more preferably 1 hour or more and 10 hours or less, and still more preferably 1.5 hours or more and 8 hours or less. The firing is preferably performed at 500°C or higher and 1,300°C or lower, more preferably 600°C or higher and 1,100°C or lower, and still more preferably 700°C or higher and 900°C or lower. The firing time is, for example, preferably 0.5 hours or more and 20 hours or less, more preferably 1 hour or more and 10 hours or less, and still more preferably 1 hour or more and 8 hours or less. The firing is preferably performed in an atmosphere of an inert gas such as nitrogen gas, and more preferably performed in a nitrogen gas atmosphere containing 1 to 20 vol% of H₂ gas.

As described above, the columnar metal-doped zinc oxide can be obtained through the step of doping the columnar zinc oxide with a metal. Therefore, according to one embodiment of the present invention, a columnar metal-doped zinc oxide obtained by doping the columnar zinc oxide according to the present invention with a metal is provided. In addition, according to one embodiment of the present invention, the metal used for doping in the columnar metal-doped zinc oxide is at least one of aluminum and gallium. Here, according to one embodiment of the present invention, the doping amount of the metal in the columnar metal-doped zinc oxide is 0.01 mol% or more and 1 mol% or less with respect to the molar amount of zinc in the columnar zinc oxide. The columnar metal-doped zinc oxide according to the present invention thus obtained has a high whiteness, preferably a whiteness L of 65 or more, more preferably 70 or more, and still more preferably more than 70.

Further, according to one embodiment of the present invention, the columnar metal-doped zinc oxide can reduce the viscosity when being kneaded with a resin. That is, the columnar metal-doped zinc oxide of the present invention can be used as a viscosity lowering agent in a resin composition containing a resin. When the resin composition containing the columnar metal-doped zinc oxide and the resin has a low viscosity, the handleability can be improved. Further, in the resin composition, the blending amount of the columnar metal-doped zinc oxide can be increased.

Although the embodiments of the present invention have been described in detail, these are illustrative and exemplary and not restrictive, and it is clear that the scope of the present invention should be interpreted by the appended claims.

The present invention includes the following aspects and forms.

[1] A production method of a columnar zinc oxide, including:
   a step of preparing a plate-shaped zinc compound in which an electrical conductivity of a supernatant liquid is 0.5 mS/cm or less; and
   a step of heating a dispersion liquid containing the plate-shaped zinc compound and a dispersing medium to 50°C or higher, in which
   the heating is performed so that a weight change rate of the dispersion liquid before and after heating is 2% or less;
[2] the production method according to [1], in which the step of preparing further includes adding a basic compound to an aqueous solution containing a water-soluble zinc salt to prepare the plate-shaped zinc compound.
[3] The production method according to [2], in which the water-soluble zinc salt is at least one of zinc nitrate and zinc acetate.
[4] The production method according to [2] or [3], in which the basic compound is one or more selected from a group consisting of ammonia, sodium hydroxide, potassium hydroxide, 2-amino-2-ethyl-1,3-propanediol, 2-(2-aminoethoxy)ethanol, and diethanolamine.
[5] The production method according to any one of [1] to [4], wherein a content of the plate-shaped zinc compound in the dispersion liquid before the heating is 2.5 mass% or more.
[6] The production method according to any one of [1] to [5], further including a drying step of drying a product obtained through the step of heating under a temperature condition exceeding 100°C.
[7] The production method according to [6], further including a step of doping a columnar zinc oxide obtained through the drying step with a metal.
[8] The production method according to [7], wherein the metal is at least one of aluminum and gallium.
[9] A columnar zinc oxide, in which an average minor axis exceeds 0.5 µm and an average aspect ratio is 2 or more and 10 or less.
[10] The columnar zinc oxide according to [9], in which an average minor axis exceeds 0.75 µm and an average aspect ratio is 2 or more and 10 or less.
[11] The columnar zinc oxide according to [9] or [10], in which an average minor axis exceeds 1.0 µm and an average aspect ratio is 2 or more and 10 or less.
[12] A columnar metal-doped zinc oxide obtained by doping the columnar zinc oxide according to any one of [9] to [11] with a metal.
[13] The columnar metal-doped zinc oxide according to [12], wherein the metal is at least one of aluminum and gallium.
[14] The columnar metal-doped zinc oxide according to [12] or [13], wherein a doping amount of the metal is 0.01 mol% or more and 1 mol% or less with respect to a molar amount of zinc in the columnar zinc oxide.

### Examples

The present invention will be described in more detail with reference to the following examples and comparative examples. However, the technical scope of the present invention is not limited only to the following examples. Unless otherwise specified, "%" and "part(s)" mean "mass%" and "part(s) by mass", respectively. In addition, in the following examples, unless otherwise specified, operations were performed under the conditions of room temperature (25°C)/relative humidity of 40% RH or more and 50% RH or less.

### [Synthesis of plate-shaped zinc compound]

With respect to 400 g of pure water, a water-soluble zinc salt shown in Table 1 was dissolved to a concentration of 0.5 mol/L in water to prepare an aqueous zinc salt solution at room temperature. A pH meter (F-51, manufactured by HORIBA, Ltd.) was set in the prepared aqueous zinc salt solution (20 to 35°C), and an aqueous solution of a basic compound shown in Table 1 was added dropwise at room temperature until the pH reached 7.5 to obtain a white precipitate. As the aqueous solution of a basic compound used, each of a 29 mass% NH₃ aqueous solution, a 12 mass% KOH aqueous solution, a 12 mass% NaOH aqueous solution, a 20 mass% 2-amino-2-ethyl-1,3-propanediol aqueous solution, 20 mass% 2-(2-aminoethoxy)ethanol, and a 20 mass% diethanolamine aqueous solution was used. In the column of basic compound in Table 1, 2-amino-2-ethyl-1,3-propanediol is denoted as "AEP", 2-(2-aminoethoxy)ethanol is denoted as "AEE", and diethanolamine is denoted as "DEA".

The obtained precipitate was separated by suction filtration, and washed with water by adding pure water to the precipitate remaining on a filter paper, and the electrical conductivity of washing water was measured with a conductivity meter (DS-71, manufactured by HORIBA, Ltd.). Washing with pure water was repeated until the electrical conductivity of washing water obtained by washing the solid (plate-shaped zinc compound: 80 g) on the filter paper with 300 mL of water reached the electrical conductivity shown in Table 1 (in Table 1, expressed as "Conductivity of washing water; corresponding to "conductivity of supernatant liquid") to obtain a wet powder. A method for measuring the electrical conductivity of washing water will be described later. It was checked that the wet powder (plate-shaped zinc compound) has a plate shape with a diameter of 0.5 µm and a thickness of 0.1 µm.

### [Synthesis of columnar zinc oxide]

Two grams of the obtained wet powder was collected, and the moisture content was measured with a moisture meter (MX-50, manufactured by A&D Company, Limited, set temperature: 160°C). The rest of the wet powder was diluted by adding pure water thereto based on the value of the moisture content so that the solid content concentration was the concentration of dispersion liquid shown in Table 1 to obtain a dispersion liquid. The weight of a container made of polytetrafluoroethylene having a volume of 250 mL and a lid was measured, and the container was filled with the dispersion liquid in an amount that gave a filling rate (vol%) shown in Table 1. In Examples 1 to 14 and Comparative Examples 2 to 4, the container was covered with lid and sealed, and then the weight before heating was measured. In Comparative Examples 1, 5, and 6, the container was not covered with lid, and the weight before heating was measured.

The container in which the dispersion liquid was placed was heated under the heating conditions shown in Table 1 using an incubator (DK600T, manufactured by Yamato Scientific Co., Ltd.). After completion of heating, the container was taken out from the incubator, cooled to room temperature, and then the weight after heating was measured. The weight loss after heating shown in Table 1 was calculated by the formula "(weight before heating - weight after heating)/(weight before heating - weight of container made of Teflon (registered trademark) and lid) × 100" when the container was covered with lid, and calculated by the formula "(weight before heating - weight after heating)/(weight before heating - weight of container made of Teflon (registered trademark)) × 100" when the container was not covered with lid. A white precipitate from the dispersion liquid after heating was separated by suction filtration, and washed with pure water until the electrical conductivity of washing water obtained by washing a solid (zinc oxide: 20 g) on a filter paper with 300 mL of water reached 0.15 mS/cm or less. After washing with water, the resulting product was placed in an open container and dried in the incubator at 105°C for 1 day to obtain a white powder. The "weight loss after heating" corresponds to the "weight change rate of the dispersion liquid before and after heating".

### [Evaluation method]

The measurement of the electrical conductivity of washing water (supernatant liquid) and each evaluation of the columnar zinc oxide were performed according to the following methods.

### [Electrical conductivity of washing water]

A solid on a filter paper (80 g in the case of a plate-shaped zinc compound; 20 g in the case of zinc oxide) was subjected to suction filtration using 300 mL of pure water, and the electrical conductivity of the washing water (filtrate) (liquid temperature: 15°C or higher and 30°C or lower) was measured using an electrical conductivity meter (DS-71, manufactured by HORIBA, Ltd.). It was checked by a moisture meter (MX-50, manufactured by A&D Company, Limited, set temperature: 160°C) that the moisture content of the solid for which the electrical conductivity of the washing water is measured is 60 mass% or more and 90 mass% or less in the case of a plate-shaped zinc compound, and 50 mass% or less in the case of zinc oxide.

### [Particle shape and proportion of columnar particles]

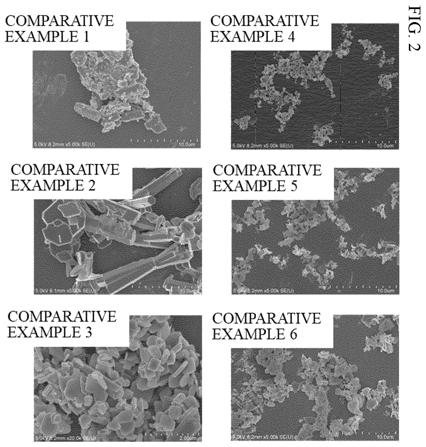

The particle shape of the obtained columnar zinc oxide was observed using a scanning electron microscope (SEM) (SU8000, manufactured by Hitachi High-Technologies Corporation). The obtained SEM images (5,000x) are shown in Fig. 1 (Examples 1 to 14) and Fig. 2 (Comparative Examples 1 to 6).

The number of all particles and the number of columnar particles observed in a field of view at a magnification of 5,000x were visually counted, and the number of columnar particles with respect to the number of all particles was calculated as "proportion (number%) of columnar particles".

### [Particle size]

For the obtained columnar zinc oxide, several (4 to 15) SEM images having a magnification of 3,000x or 10,000x were prepared using image analysis type particle size distribution measurement software (MacView, manufactured by Mountech Co., Ltd.), the minor axis and the major axis of a total of about 150 (130 to 180) particles were measured using the software, and the volume distribution D₅₀ was calculated for each of the minor axis and the major axis. The D₅₀ of the volume distribution of the minor axis was taken as the value of the average minor axis, and the D₅₀ of the volume distribution of the major axis was taken as the value of the average major axis. The average aspect ratio was calculated by dividing the average major axis by the average minor axis (that is, "average major axis/average minor axis") for the obtained particle size (average minor axis and average major axis).

**[Table 1]**

| | Synthesis conditions of plate-shaped zinc compound | | | Synthesis conditions of columnar zinc oxide | | | | | | Obtained particles | | | |
|---|---|---|---|---|---|---|---|---|---|---|---|---|---|
| | Water-soluble zinc salt | Basic compoun d | Conductivi ty of washing water [mS/cm] | Container | Heating conditions [temperature × time] | Concentratio n of dispersion liquid [mass%] | Filling rate of dispersion liquid in container [vol%] | Weight loss after heating [mass%] | Particle shape | Proportion of columnar particles [number% ] | Averag e minor axis [µm] | Averag e major axis [µm] | Averag e aspect ratio |
| Example 1 | Zn(NO₃)₂· 6H₂O | NH₃ | 0.06 | Sealed | 80°C × 17.5 h | 15 | 18 | 0.5 | Columnar | 96 | 1.18 | 5.46 | 4.6 |
| Example 2 | Zn(NO₃)₂· 6H₂O | KOH | 0.08 | Sealed | 80°C × 17.5 h | 15 | 18 | 0.5 | Columnar | 98 | 0.56 | 3.92 | 7.0 |
| Example 3 | Zn(NO₃)₂· 6H₂O | NaOH | 0.06 | Sealed | 80°C × 17.5 h | 15 | 18 | 0.5 | Columnar | 97 | 0.53 | 3.06 | 5.8 |
| Example 4 | Zn(NO₃)₂-6H₂O | AEP | 0.03 | Sealed | 80°C × 17.5 h | 15 | 8 | 0.9 | Columnar | 93 | 1.84 | 10.55 | 5.7 |
| Example 5 | Zn(NO₃)₂· 6H₂O | AEE | 0.06 | Sealed | 80°C × 17.5 h | 15 | 12 | 0.6 | Columnar | 96 | 1.13 | 5.39 | 4.8 |
| Example 6 | Zn(NO₃)₂· 6H₂O | DEA | 0.05 | Sealed | 80°C × 17.5 h | 15 | 4 | 1.8 | Columnar | 94 | 1.55 | 7.45 | 4.8 |
| Example 7 | Zn(NO₃)₂ · 6H₂O | NH₃ | 0.06 | Sealed | 80°C × 17.5 h | 5 | 18 | 0.5 | Columnar | 98 | 1.33 | 7.02 | 5.3 |
| Example 8 | Zn(NO₃)₂· 6H₂O | NH₃ | 0.06 | Sealed | 80°C × 17.5 h | 3 | 18 | 0.5 | Columnar | 97 | 1.03 | 6.72 | 6.5 |
| Example 9 | Zn(CH₃COO) ·2H₂O | KOH | 0.08 | Sealed | 80°C × 17.5 h | 10 | 41 | 0.1 | Columnar | 93 | 1.18 | 2.55 | 2.2 |
| Example 10 | Zn(NO₃)₂· 6H₂O | NH₃ | 0.15 | Sealed | 80°C × 17.5 h | 15 | 41 | 0.1 | Columnar | 96 | 1.63 | 7.52 | 4.6 |
| Example 11 | Zn(NO₃)₂· 6H₂O | KOH | 0.09 | Sealed | 60°C × 11.4 h | 15 | 19 | 0.5 | Columnar | 96 | 1.12 | 5.34 | 4.8 |
| Example 12 | Zn(NO₃)₂· 6H₂O | NH₃ | 0.06 | Sealed | 80°C × 17.5 h | 15 | 54 | 0.1 | Columnar | 96 | 1.39 | 6.48 | 4.7 |
| Example 13 | Zn(NO₃)₂· 6H₂O | NH₃ | 0.07 | Sealed | 80°C × 17.5 h | 15 | 14 | 0.6 | Columnar | 96 | 1.09 | 9.81 | 9.0 |
| Example 14 | Zn(NO₃)₂· 6H₂O | NaOH | 0.11 | Sealed | 80°C × 17.5 h | 15 | 48 | 0.1 | Columnar | 97 | 0.44 | 2.93 | 6.7 |
| Comparativ e Example 1 | Zn(NO₃)₂-6H₂O | NH₃ | 0.07 | Open | 90°C × 21h | 15 | 11 | 83.6 | Amorpho us | 1 | - | - | |
| Comparativ e Example 2 | Zn(NO₃)₂-6H₂O | NH₃ | 0.55 | Sealed | 80°C × 17.5 h | 15 | 14 | 0.6 | Columnar + plate shape | 6 | - | - | |
| Comparativ e Example 3 | Zn(NO₃)₂· 6H₂O | NH₃ | 68.1 | Sealed | 90°C × 19.5h | 2 | 19 | 0.5 | Plate shape | 0 | - | - | |
| Comparativ e Example 4 | Zn(NO₃)₂· 6H₂O | KOH | 0.07 | Sealed | 43°C × 114 h | 15 | 13 | 0.6 | Amorpho us | 2 | - | - | |
| Comparativ e Example 5 | Zn(NO₃)₂· 6H₂O | NH₃ | 0.48 | Open | 80°C × 4 h | 2 | 21 | 40.6 | Amorpho us | 0 | - | - | |
| Comparativ e Example 6 | Zn(NO₃)₂· 6H₂O | NH₃ | 0.48 | Open | 80°C × 17.5 h | 2 | 21 | 97.8 | Amorpho us | 0 | - | - | |

As shown in Table 1 and Fig. 1, it could be verified that a columnar zinc oxide is obtained at a proportion of 90 number% or more under the conditions of Examples 1 to 14. On the other hand, as shown in Table 1 and Fig. 2, in the zinc oxide obtained under the conditions of Comparative Examples 1 to 6, the proportion of columnar particles was less than 10 number% and it was found to be not suitable as a production method of a columnar zinc oxide. From the above, it was found that a columnar zinc oxide can be obtained with high efficiency under the conditions of Examples 1 to 14.

### [Synthesis of columnar Al-doped zinc oxide]

Columnar Al-doped zinc oxides doped with aluminum were synthesized using the columnar zinc oxides of Examples 12 to 14. Hereinafter, columnar Al-doped zinc oxides of Reference Examples 1 to 3 were synthesized using the columnar zinc oxide of Example 12, columnar Al-doped zinc oxides of Reference Examples 4 and 5 were synthesized using the columnar zinc oxide of Example 13, and columnar Al-doped zinc oxides of Reference Examples 6 to 9 were synthesized using the columnar zinc oxide of Example 14.

With respect to 7 g of the columnar zinc oxide, aluminum nitrate nonahydrate was weighed so as to give an Al/Zn ratio shown in Table 2 and dissolved in 20 g of pure water to prepare an aqueous aluminum nitrate solution. The prepared aqueous aluminum nitrate solution was added to and mixed with the columnar zinc oxide, and the mixture was heated at 100°C for 3 hours and at 150°C for 3 hours using an incubator (DK600T, manufactured by Yamato Scientific Co., Ltd.) to obtain a powder. The obtained powder was fired at 800°C for 1 hour in a nitrogen gas atmosphere containing 10 vol% of H₂ gas to synthesize a columnar Al-doped zinc oxide.

### [Evaluation method]

Each evaluation of the columnar Al-doped zinc oxide was performed according to the following method.

### [Viscosity]

The obtained columnar Al-doped zinc oxide and an epoxy resin (Epomount main agent, manufactured by Refine Tec Ltd.) were mixed at a particle volume concentration of 16.4%, and stirred at 1,400 rpm for 4 minutes using a rotation-revolution mixer (Awatori Rentaro ARE-310, manufactured by THINKY CORPORATION). Thereafter, the shear viscosity of the obtained resin composition was measured at a shear rate of 10 [1/s] using a viscoelasticity measuring apparatus (MCR302, manufactured by Anton Paar Japan K.K.).

### [Particle shape]

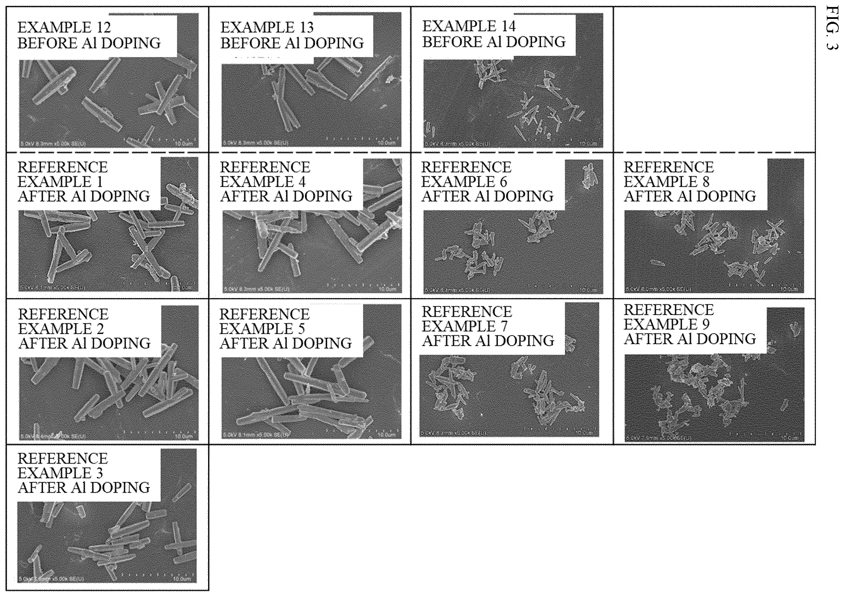

The particle shape of the obtained columnar Al-doped zinc oxide was observed using a scanning electron microscope (SEM) (SU8000, manufactured by Hitachi High-Technologies Corporation). The obtained SEM images (5,000x) are shown in Fig. 3 (Reference Examples 1 to 9). Fig. 3 also shows SEM images (5,000x) of the columnar zinc oxides before Al doping.

### [Whiteness L]

A sample (columnar Al-doped zinc oxide) was filled in a dedicated holder of a spectrophotometer (UV-2450, manufactured by Shimadzu Corporation) and flattened, and then set in the spectrophotometer to measure a reflectance (wavelength: 860 to 240 nm). The reflectance data was read with color measurement software (COL-UVPC, manufactured by Shimadzu Corporation) to calculate the whiteness L.

### [Volume resistivity]

A sample (columnar Al-doped zinc oxide) was introduced into a powder probe unit, and after the sample was pressurized to reach a load of 9.8 MPa (about 3.1 kN), measurement was performed with a low resistivity meter. The following instruments were used for measuring the volume resistivity.

Powder resistance measurement system (model: MCP-PD51, manufactured by Nitto Seiko Analytech Co., Ltd.)
Low resistivity meter (Loresta GP, manufactured by Nitto Seiko Analytech Co., Ltd.)
Low resistance probe for powder (MCP-PD511, manufactured by Nitto Seiko Analytech Co., Ltd.)

**[Table 2]**

| | Average minor axis [µm] | Average major axis [µm] | Average aspect ratio | Viscosity during kneading with resin [mPa·s] | Al/Zn ratio [mol%] | Whiteness L | Volume resistivity [Ω/cm] |
|---|---|---|---|---|---|---|---|
| Reference Example 1 | 1.39 | 6.48 | 4.7 | 15600 | 0.25 | 73.25 : | 310 |
| Reference Example 2 | | | | | 0.10 | 73.02 | 3900 |
| Reference Example 3 | | | | | 0.50 | 75.10 : | 1700 |
| Reference Example 4 | 1.09 | 9.81 | 9.0 | 43600 | 0.25 | 78.33 | 420 |
| Reference Example 5 | | | | | 0.10 | 79.07 | 1200 |
| Reference Example 6 | | | | | 0.10 | 85.06 | 5700 |
| Reference Example 7 | 0.44 | 2.93 | 6.7 | 107000 | 0.50 | 85.05 | 190 |
| Reference Example 8 | | | | | 1.0 | 85.73 | 290 |
| Reference Example 9 | | | | | 5.0 | 87.40 | 940 |

As can be seen from the columnar Al-doped zinc oxides of Reference Examples 1 to 9 shown in Table 2, it was verified that when a columnar zinc oxide in which the proportion of columnar particles exceeds 90 number% is doped with Al, conductive particles having a volume resistivity of 6,000 Ω/cm or less are obtained. From Fig. 3, it was verified that even when the columnar zinc oxide is doped with Al, the particle shape does not change, and the columnar shape is maintained. In addition, by adjusting the doping amount of Al (Al/Zn ratio), the volume resistivity of the columnar Al-doped zinc oxide could be set to 500 Ω/cm or less. In addition, the whiteness L of the obtained columnar Al-doped zinc oxide exceeded 70, and it was found that conductive particles having a high whiteness are obtained.

It was found that the columnar Al-doped zinc oxides of Reference Examples 1 to 5, in which the minor axis exceeds 0.5 µm and the aspect ratio is 2 or more and 10 or less have a remarkably low viscosity during kneading with the resin. Reduction of the viscosity of the resin composition containing the columnar Al-doped zinc oxide and the resin has an advantage that the blending amount of the columnar Al-doped zinc oxide can be increased in the resin composition containing the columnar Al-doped zinc oxide and the resin in addition to improving the handleability. That is, in the resin composition containing the columnar Al-doped zinc oxide and the resin, the electrical conductivity of the resin composition can be further improved by increasing the blending amount of the columnar Al-doped zinc oxide.

As described above, according to the production method of the present invention, columnar zinc oxide can be obtained at a high content.

The present application is based on Japanese Patent Application No. 2022-058778 filed on March 31, 2022, the disclosure content of which is incorporated herein by reference in its entirety.

## Claims

1. A production method of a columnar zinc oxide, comprising:
a step of preparing a plate-shaped zinc compound in which an electrical conductivity of a supernatant liquid is 0.5 mS/cm or less; and
a step of heating a dispersion liquid containing the plate-shaped zinc compound and a dispersing medium to 50°C or higher, wherein
the heating is performed so that a weight change rate of the dispersion liquid before and after heating is 2% or less.

2. The production method according to claim 1, wherein the step of preparing further includes adding a basic compound to an aqueous solution containing a water-soluble zinc salt to prepare the plate-shaped zinc compound.

3. The production method according to claim 2, wherein the water-soluble zinc salt is at least one of zinc nitrate and zinc acetate.

4. The production method according to claim 2 or 3, wherein the basic compound is one or more selected from a group consisting of ammonia, sodium hydroxide, potassium hydroxide, 2-amino-2-ethyl-1,3-propanediol, 2-(2-aminoethoxy)ethanol, and diethanolamine.

5. The production method according to claim 1 or 2, wherein a content of the plate-shaped zinc compound in the dispersion liquid before the heating is 2.5 mass% or more.

6. The production method according to claim 1, further comprising a drying step of drying a product obtained through the step of heating under a temperature condition exceeding 100°C.

7. The production method according to claim 6, further comprising a step of doping a columnar zinc oxide obtained through the drying step with a metal.

8. The production method according to claim 7, wherein the metal is at least one of aluminum and gallium.

9. A columnar zinc oxide, wherein an average minor axis exceeds 0.5 µm and an average aspect ratio is 2 or more and 10 or less.

10. The columnar zinc oxide according to claim 9, wherein an average minor axis exceeds 0.75 µm and an average aspect ratio is 2 or more and 10 or less.

11. The columnar zinc oxide according to claim 9 or 10, wherein an average minor axis exceeds 1.0 µm and an average aspect ratio is 2 or more and 10 or less.

12. A columnar metal-doped zinc oxide obtained by doping the columnar zinc oxide according to claim 9 with a metal.

13. The columnar metal-doped zinc oxide according to claim 12, wherein the metal is at least one of aluminum and gallium.

14. The columnar metal-doped zinc oxide according to claim 12 or 13, wherein a doping amount of the metal is 0.01 mol% or more and 1 mol% or less with respect to a molar amount of zinc in the columnar zinc oxide.
